# EUROPEAN PATENT SPECIFICATION

(11) **EP 0 721 557 B1**
(45) Date of publication and mention of the grant of the patent: **20.01.1999**
(21) Application number: 94928223.0
(22) Date of filing: 28.09.1994
(51) Int. Cl.: F25J 3/02

(54) **THERMODYNAMIC SEPARATION**
THERMODYNAMISCHES TRENNVERFAHREN
SEPARATION THERMODYNAMIQUE

(30) Priority: 01.10.1993 CA 2107504
(43) Date of publication of application: 17.07.1996
(73) Proprietor: Stothers, William Robert, Calgary, Alberta, T3K 2X9 (CA)
(72) Inventor: Stothers, William Robert, Calgary, Alberta, T3K 2X9 (CA)
(74) Representative: Adkins, Michael
(86) International application number: CA9400520
(87) International publication number: WO9510011

(56) References cited:
- US-A- 3 572 046
- US-A- 4 770 683

## Description

The present invention relates to a method of separating a feed gas into a first supply component and a second supply component comprising the features as indicated in the first part of claim 1.

Such a method is disclosed, for example, in US-A-4 770 683 and is especially suited for separating propane, methane, ethane or carbon dioxide from natural gas.

US-A-4,770,683, describes a process and an apparatus for distillation of two materials of differing boiling points. A process for distillation of two materials of differing boiling points particularly propane, ethane or carbon dioxide from natural gas is described in which the conventional distillation tower is divided into a first tower at higher pressure than a conventional tower and a second tower at lower pressure. Liquid drawn from the first is expanded to the lower pressure through two or more stages with cool extracted at each stage and used to cool gas withdrawn from the top of the first tower to keep the top tray at a required temperature. Gas withdrawn from the second tower is compressed and cooled for return to the first tower as a reflux. The use of the cool from the expanded liquid and the use of the two towers provides an improved thermo-dynamic efficiency and avoids the use of costly turbo-expanders.

The prior art above therefore discloses a method of separating a feed gas into a first supply component and a second supply component, the first supply component having a lower boiling point than the second supply component, the method comprising providing a first separation vessel and a second separation vessel at a pressure lower than that of the first, each of the separation vessels being arranged such that components of a lower boiling point move upwardly in the respective separation vessel as gas toward a top of the respective vessel and such that components of a higher boiling point move downwardly in the respective separation vessel toward a bottom of the respective vessel as liquid, supplying the feed gas to the first separation vesssel, transferring liquid from the bottom of the first vessel to the second vessel as a feed thereto, extracting gas from the top of said first vessel as the first supply component, and extracting liquid from the bottom of said second vessel as the second supply component,

An aim of the present invention is to provide improvements in the methods disclosed in the above patent which provide improved efficiencies.

The invention is characterized in the steps of:
providing a recycle fractionator vessel separate from the first and second vessels at a pressure higher than that of the second vessel;
extracting gas from the top of the second vessel, compressing the gas and supplying the compressed gas as a feed to the recycle fractionator vessel for fractionation by the recycle fractionator vessel into a top gas stream and a bottom liquid stream;
condensing and sub-cooling the top gas stream and feeding the sub-cooled condensed top stream to the first vessel as a cooled reflux;
and sub-cooling the bottom liquid stream and feeding the sub-cooled bottom liquid stream to the second vessel as a cooled reflux.

Preferably the bottom liquid stream is cooled by extracting cool from the gas from the top of the second vessel prior to feeding into the recycle fractionator vessel.

Preferably the first vessel includes a condenser and the condensed top stream is fed to the condenser.

Preferably the bottom liquid stream from the recycle fractionator vessel after cooling is fed to the second vessel as the cooled reflux at a position thereon higher than the position to which the liquid from the first vessel is fed.

Preferably the top gas stream from the recycle fractionator vessel is cooled using cool from the liquid taken from the first vessel prior to feeding to the second vessel.

One embodiment of the invention will be described hereinafter in conjunction with the accompanying drawing in which:

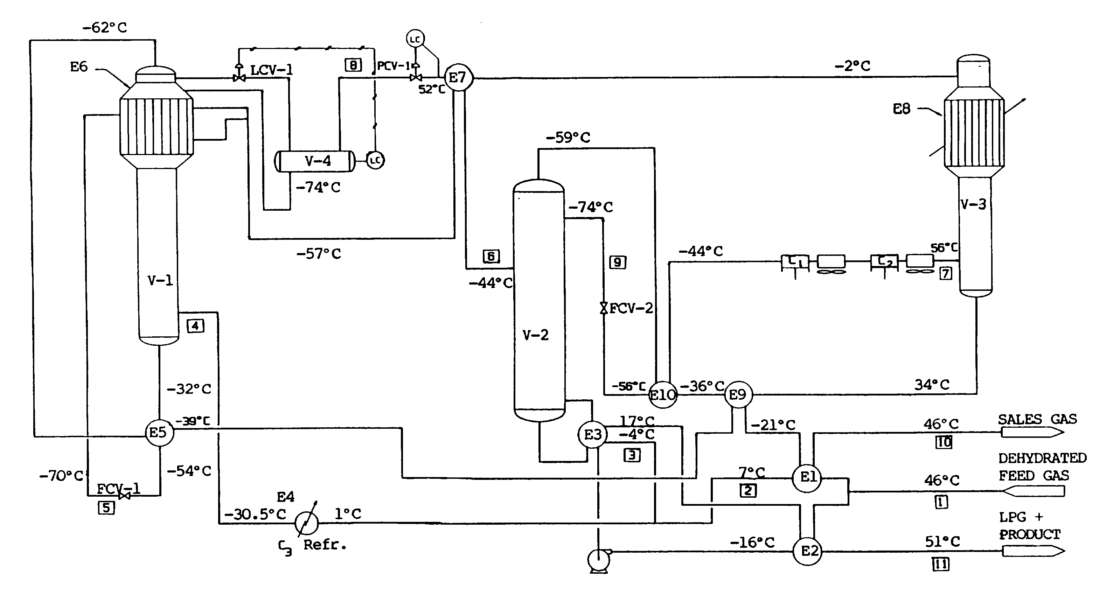

Figure 1 is a schematic illustration of the elements of the process with the temperatures of the various streams indicated.

The present process can be used for separating various different components from a supply gas of different boiling points and the following description shows only one example which is used for the separation of propane from natural gas. The same techniques can be used for separation of ethane or carbon dioxide from natural gas although of course the process parameters must be modified in accordance with known principles in order to obtain the required separations.

The process is shown schematically including the various vessels and heat exchangers by which the process is carried out. In addition the drawing shows the temperatures of the various streams of gas and liquid at the various points throughout the process in accordance with the example described herein and the various streams are numbered 1 through 11. The tables 1 through 11 set out hereinafter show the process conditions and material contents of each of the respective numbered streams which are identified on the above drawing. It will of course be appreciated that the process conditions relate only to one single example and similar conditions can be calculated for other examples of the process.

The process therefore provides in general separation vessels V1 and V2 which comprise a gas fractionator V1 and a deethanizer V2 respectively. The process further includes recycle fractionator vessel V3 and a reflux accumulator vessel V4. The process is divided into a number of streams of the materials which pass from the vessels as shown including streams 1 through 11.

The stream 1 constitutes the feed gas stream, the stream 10 constitutes the sales or separated gas, and the stream 11 constitutes the remaining gas after separation of the sales gas, in this case indicated as LPG+ product. The streams pass through a number of heat exchangers indicated at E1 through E8, the operation of which is described in more detail hereinafter. The process further includes compressors C1 and C2 together with control valves FCV1, FCV2, PCV1 and LCV1. The valves LCV1 and PCV1 are controlled by process control elements including a level control device LC and a pressure control device PC respectively.

The temperatures shown on the Process Flow Drawing and the Material Balances set out in Tables 1 through 11 hereinafter reflect design for an ambient temperature of 45 C.

The Feed Gas Stream 1, is dehydrated in a molecular sieve dehydrator or other dehydrator (not shown) that will achieve a water dew point of less than -100 C. The feed gas is divided into two steams 2 and 3.

The major portion of the Feed Gas Stream 2, is cooled in a Gas/Gas Heat Exchanger E1 obtaining cool from the Sales Gas. The remaining portion of the Feed Gas Stream 3 is cooled by taking cool from the LPG+ product and from the Deethanizer Reboiler E3. The cooled feeds are then recombined and chilled in the Chiller E4 obtaining cool from a propane refrigerant system of conventional construction. This chilled feed Stream 4 is then fed to the Gas Fractionator V1. The streams 2 and 3 are divided since this allows the control of the flow rate of the stream 3 to be used to control heat to the reboiler E3.

The Gas Fractionator V1 is a Refluxed Absorber distillation column with a condenser E6 at the top and typically 10 to 16 trays below the condenser and above the feed. Structured packing or dumped packing may alternately be used rather than valve trays; usually packed towers are preferred for smaller diameter towers. The column is arranged so that a temperature and pressure gradient is defined therein causing the components in the column to separate into a condensed liquid moving down the tower to the bottom and a lighter gas moving up the column to the top. Further details of this type of separation column are disclosed in the aforementioned prior patent of the present inventor. The parameters of the column in theoretical terms are set out in table 12 hereinafter.

Liquid from the bottom of the Gas Fractionator V1 is sub cooled in Subcooler E5 taking cool from the Sales gas stream 10. The subcooled liquid is then flashed Stream 5 and used as refrigerant for the Gas Fractionator Condenser E6. This condenser consists of vertical large diameter tubes, typically 75 mm to 150 mm in diameter. The tubes are packed with structured packing. Structured packing is a known material used in columns in place of the conventional trays but in this case used in the condenser tubes. The structured packing is of a construction known in the art and comprises a mesh material which acts to maintain the upwardly moving gas in contact with the downwardly moving liquid by moving the liquid inwardly from the wall of the tube.

Process vapor from the top tray of the Gas Fractionator V1 enters the bottom of the packed tubes and is partially condensed while flowing up through the condenser. The condensed liquid plus reflux liquid that is sprayed into the top of the tubes flows down through the packed tubes and contacts the Residue Gas vapor before it leaves the Gas Fractionator.

The shell side, that is the area of the condenser outside the tubes, of the Gas Fractionator Condenser E6 is partially flooded with flashed subcooled liquid Stream 5. Flashed vapor from Stream 5 and vapor that is vaporized due to heat taken from the E6 tubes gathers at the top of Condenser E6 and is taken to the Reflux Condenser E7 in stream 6. Liquid that is not vaporized in Condenser E6 gathers at the bottom on the shell side of that exchanger and is taken through a seal leg L1 to join the vapor leaving the top of the exchanger. The seal leg acts to maintain a high liquid level in this exchanger so that the tubes are flooded as much as practical.

The flashed Gas Fractionator Bottoms are then further flashed Stream 6 in the Reflux Condenser E7 then enter approximately the midpoint of the Deethanizer or second separation vessel V2. The Deethanizer has 12 to 20 trays or it could alternately use packing. The theoretical parameters for the vessel V2 are set out in table 13. A novel type of reflux to the Deethanizer is described below. As described above, heat is supplied to the Deethanizer Reboiler E3 from the feed gas stream 3. The Deethanizer operates at an abnormally low pressure of 120 to 300 KPa (abs). This low pressure allows its feed to be used as refrigerant for the Gas Fractionator Condenser E6 and Reflux Condenser E7. Much better separation is also achieved at this temperature and cool can be recovered from the Reboiler E3 and from the LPG + Product.

Overhead separated gas from the Deethanizer V2 is compressed using a screw compressor and a reciprocating compressor (or alternately two reciprocating stages or a multistage centrifugal compressor) C1 and C2 to the Recycle Fractionator V3.

The Recycle Fractionator is a gas fractionator that uses propane refrigerant to supply cool to its Recycle Fractionator Condenser E8. The Recycle Fractionator processes the recycle gas into a very lean overhead gas having some methane, a high ethane content. a small amount of propane and very little butane plus. The Recycle Fractionator Overhead Gas is totally condensed (at design conditions) in the Reflux Condenser E7 using cool from the Deethanizer Feed Stream 6. The above Reflux Stream 8 then flows through a Pressure Control Valve PCV1 which maintains the operating pressure of the Recycle Fractionator V3. Reflux Stream 8 flashes at the lower operating pressure of the Reflux Accumulator V4 which is typically at a pressure of 300 KPa above the operating pressure of the Gas Fractionator V1. This additional pressure typically is sufficient to lift the reflux to the top of the Gas Fractionator and distribute it through spray nozzles to each tube in the Gas Fractionator Condenser E6. Vapor from the Reflux Accumulator V4, joins the Residue Gas at the top of the Gas Fractionator after flowing through a Level Control Valve LCV1; this valve maintains a constant level in the Reflux Accumulator V4 by varying the backpressure on it.

Liquid from the bottom of the Recycle Fractionator V3 is subcooled in Subcoolers E9 and E10 which take cool from the Residue Gas and the Recycle Gas, respectively. (In some applications of the process, it may be advisable to omit Subcooler E9 and obtain all the subcooling from the Recycle Gas in E10 This would provide warmer recycle gas which may relax a metallurgy restriction for the Recycle Compressor C1. The subcooled liquid from the Recycle Fractionator is then flashed to the operating pressure of the Deethanizer V2 and used as reflux at the top of the Deethanizer.

There are many ways to control this process. Use of distributed control is definitely worthwhile for most applications particularly large plants and plants where there is a variation in flow or composition. One method of controlling the process is to control the flow in Flow Control Valve FCV1 in order to maintain a constant throughput and constant suction pressure for the Recycle Compressor C1 and C2. This will require a large reservoir of liquid in the bottom of the Gas Fractionator V1. It would then be proposed to maintain the level of the liquid in the base of the Gas Fractionator V1 by varying the height of the refrigerant in the Chiller E4. Of course, there would have to be a minimum level that would be maintained in vessel V1 by overriding the operation of FCV1 and operating it as a level control valve.

Normally, it is advisable to maintain a constant flow of reflux Stream 9 to the Deethanizer V2 using FCV2; this would require a reservoir of reflux liquid in the base of V3. Then the liquid level in the base of V3 could be maintained by varying the back pressure on this vessel using PCV1. A small decrease in back pressure would quickly lower the liquid level in the base of V3. Depending upon the process configuration, there is a limit on how low the back pressure on V3 can be lowered and still maintain sufficient pressure for reflux to flow to V1. If the lowest backpressure for V3 is reached and the liquid level in the base of V3 is still too high, it may be lowered by lowering the refrigerant level in the Gas Fractionator Condenser E8. Similar to valve FCV1, valve FCV2 would be over-ridden as a level control valve if the liquid level in V3 reached a minimum level. There would also be a maximum operating pressure for the Recycle Fractionator based upon its design pressure and/or the maximum discharge pressure of the Recycle Compressor C1 and C2.

Note that control of the back pressure on the Recycle Fractionator using valve PCV-1 is so sensitive that, in practice, it can best be done by having two valves in parallel for PCV-1. Control is achieved by adjusting the smaller of the two valves then when it is either fully open or fully closed, the larger valve is adjusted to put the smaller valve back in control.

The specified ethane content of the LPG+ product could be measured using a process chromatography or indicated by measuring the reboiler return temperature. The ethane content of the LPG+ Product is controlled by controlling the flow of heat to the Deethanizer Reboiler E3. This can be done by controlling the flow rate of Stream 3 or the ratio of the flows of Stream 3 and Stream 2.

With the above means of process control, the flow rate through the Recycle Compressor C1 and C2, tends to be maintained at a constant rate as the plant is turned down. This phenomenon is enhanced if the refrigerant temperature for the Feed Chiller can be reduced as the plant is turned down and the load on the refrigeration compressor decreases. In this manner, as the plant is turned down, that is, the flow rate of Stream 1 decreases; the flow rates of Streams 7, 8, and 9 tend to be maintained at a constant rate. That causes an increase of the reflux ratios for the Gas Fractionator and Deethanizer. The increase in these reflux ratios results in a higher percentage propane recovery as the plant is turned down. Note that most cryogenic processes have a loss in recovery as the plant is turned down due to a loss in turbo-expander efficiency when the plant is not operated at the design rate.

In optimizing the operation of a plant, the flow and composition of the two reflux streams, Stream 8 and 9, can be measured and analyzed. Then the flow setting for valve FCV2, controlling the reflux flow to the Deethanizer, can be adjuster to obtain an optimum recovery. Putting plant operating information into a computer thermodynamic model would quickly show optimum flow setting for FCV-2 for various plant operating conditions. In a similar manner, the interstage refrigeration level can be optimized to determine an optimum overhead temperature for the Recycle Fractionator V3.

Tables 12, 13 and 14 show theoretical calculations for the parameters within the three separation vessels that is the gas fractionator or first vessel V1, the D ethanizer or second vessel V2 and the recycle fractionator vessel V3. The column on the left hand side of each table refers to the individual trays of the vessel when calculated on a theoretical basis. Thus the pressure and temperature of each tray is indicated, but this assumes that the trays are of theoretically 100% efficiency, whereas this cannot be achieved in practice. In practice, therefore, the number of trays will be increased from the theoretical trays set forth in the tables.

The example as described above has the following advantages:
1. The Recycle Gas Fractionator allows higher product recoveries to be achieved with less energy requirement, less compressor capital cost, and (for moderate to large plants) less capital cost than the Two Tower Process in the above patent.
2. When this process is used for propane recovery, it is easier to control than the Three Tower Process in the former patent which had a large recycle of ethane between its Economizer Tower and the Deethanizer.
3. Like most cryogenic processes, this process can be designed for ethane recovery then operated in a manner in which only propane plus product (LPG + product) is recovered. Thus the equipment configuration for ethane recovery is very similar to that shown for propane recovery.
4. The use of the Recycle Fractionator allows the Gas Fractionator to operate at a much lower operating pressure while achieving optimum propane recovery. In the example shown, the Gas Fractionator operates at 1700 KPa (abs) which is only marginally above the required Sales Gas Pressure. Thus the Feed Gas only has to be compressed up to the Sales Gas Pressure plus a small margin for process pressure drop. Turbo-expander processes would typically require the Plant Inlet to be compressed to 3500 to 5000 KPa. Thus in situations where the Feed Gas must be compressed and the Sales Gas Pressure is low, this process requires a minimum of compressor power compared to turbo-expander and Joule-Thompson processes. Because the recycle compressor in this process is actually acting as a refrigerant compressor providing refrigeration to the Gas Fractionator Condenser and to the Feed, much less power is required than Cascade Refrigeration and Dual Refrigerant Processes.
5. Filling the tubes in the "in-tower" condensers in the Gas Fractionator and Recycle Fractionator with structured packing results in mass transfer being achieved in the Condenser. The process simulations for these towers show all the condensing being done above the last stage of distillation, but, in essence, there is at least one stage of separation in the Gas Fractionator Condenser and at least three stages for the Recycle Fractionator for the particular example shown. Having these stages of separation in the condenser results in a lower inlet temperature to the condenser which results in a bigger log mean temperature difference for the condenser. It also means that cooling is supplied to the top two or more theoretical trays in the distillation columns rather than just the top theoretical stage as in a conventional distillation column. These factors result in a better product recovery than calculated with only one theoretical stage of condenser as shown in the process simulations.
6. The structured packing in the Condenser tubes also improved mixing and heat transfer within the tube which is the limiting heat transfer film coefficient. Better heat transfer in these condensers also relates to better product recovery.

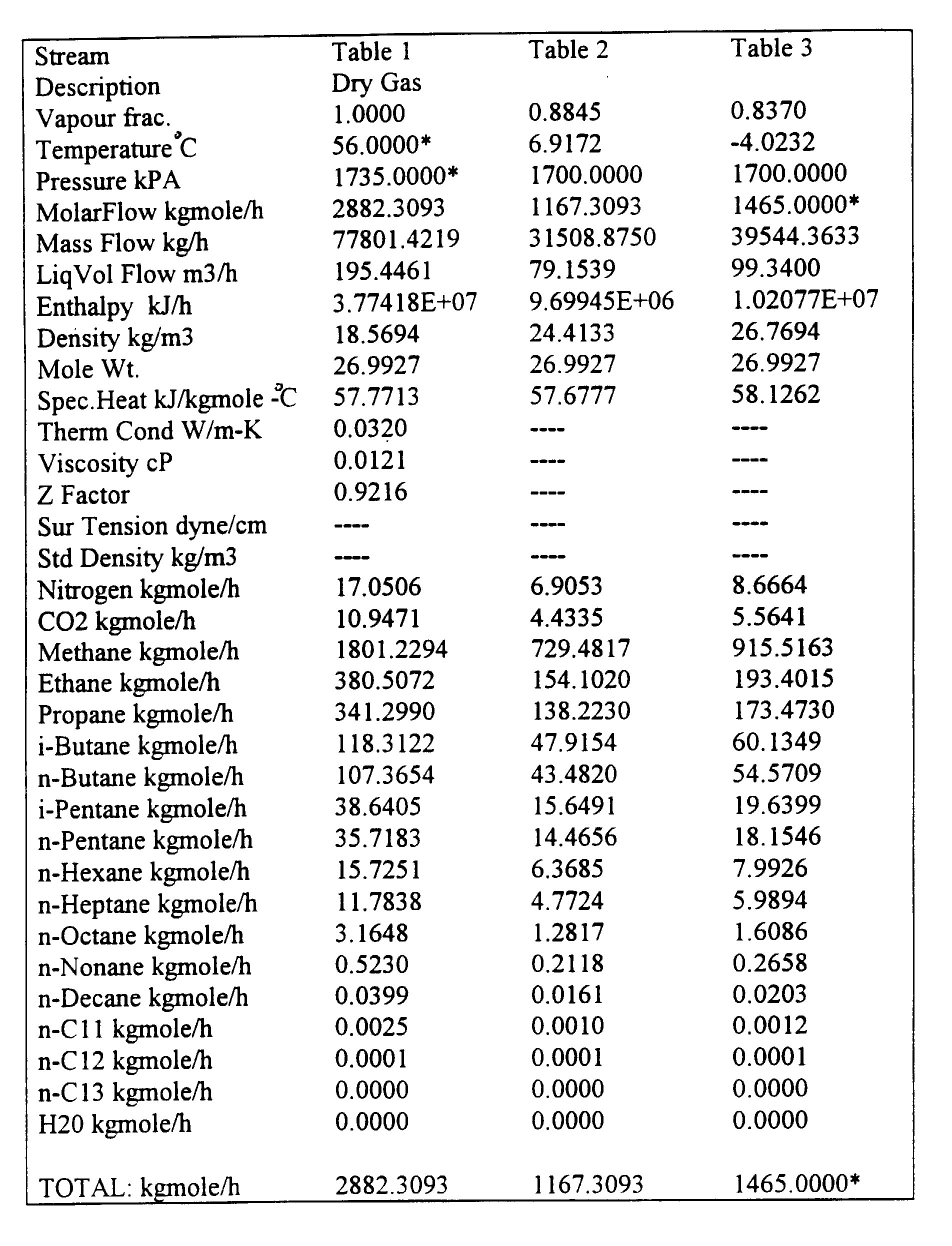

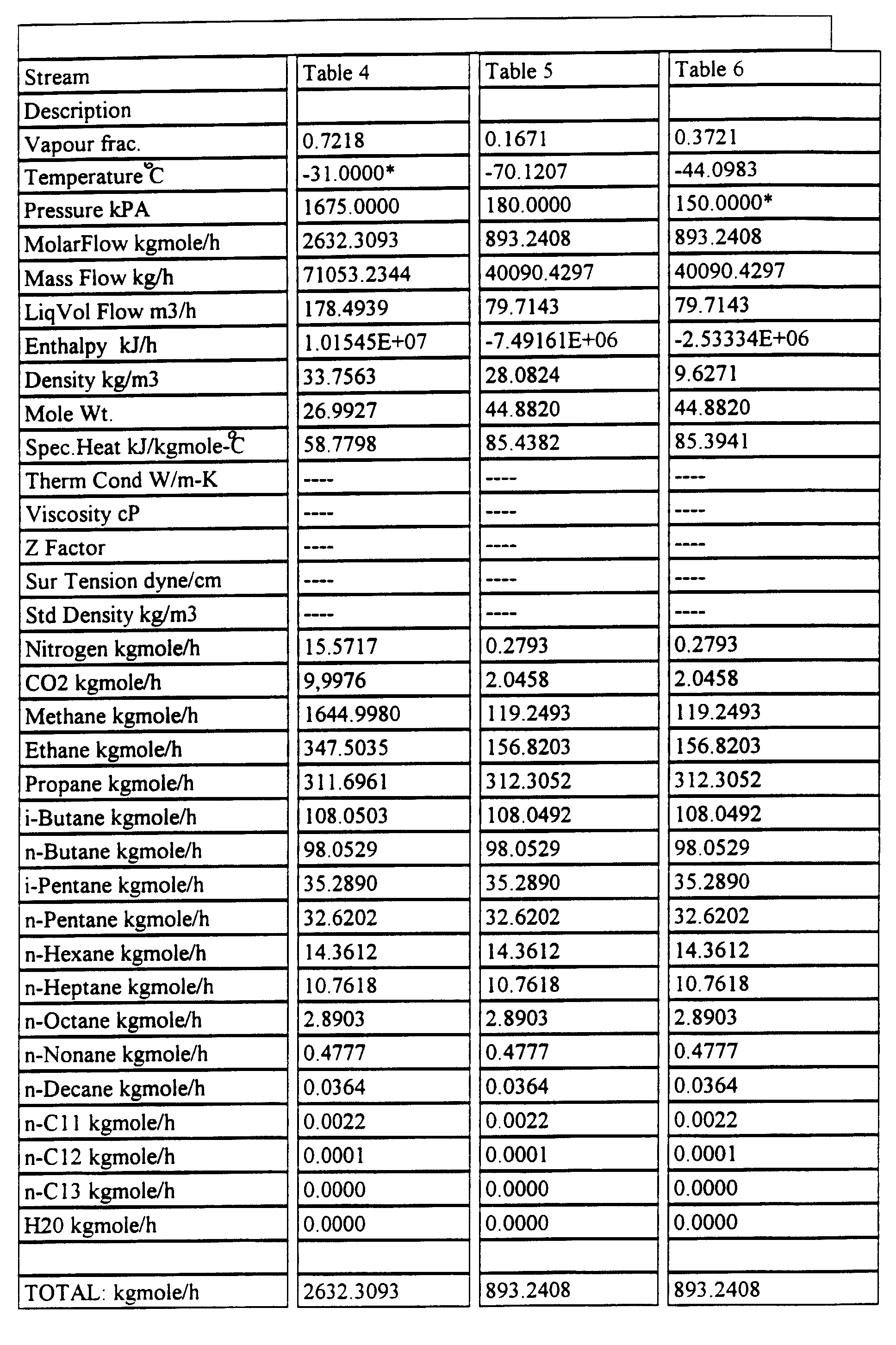

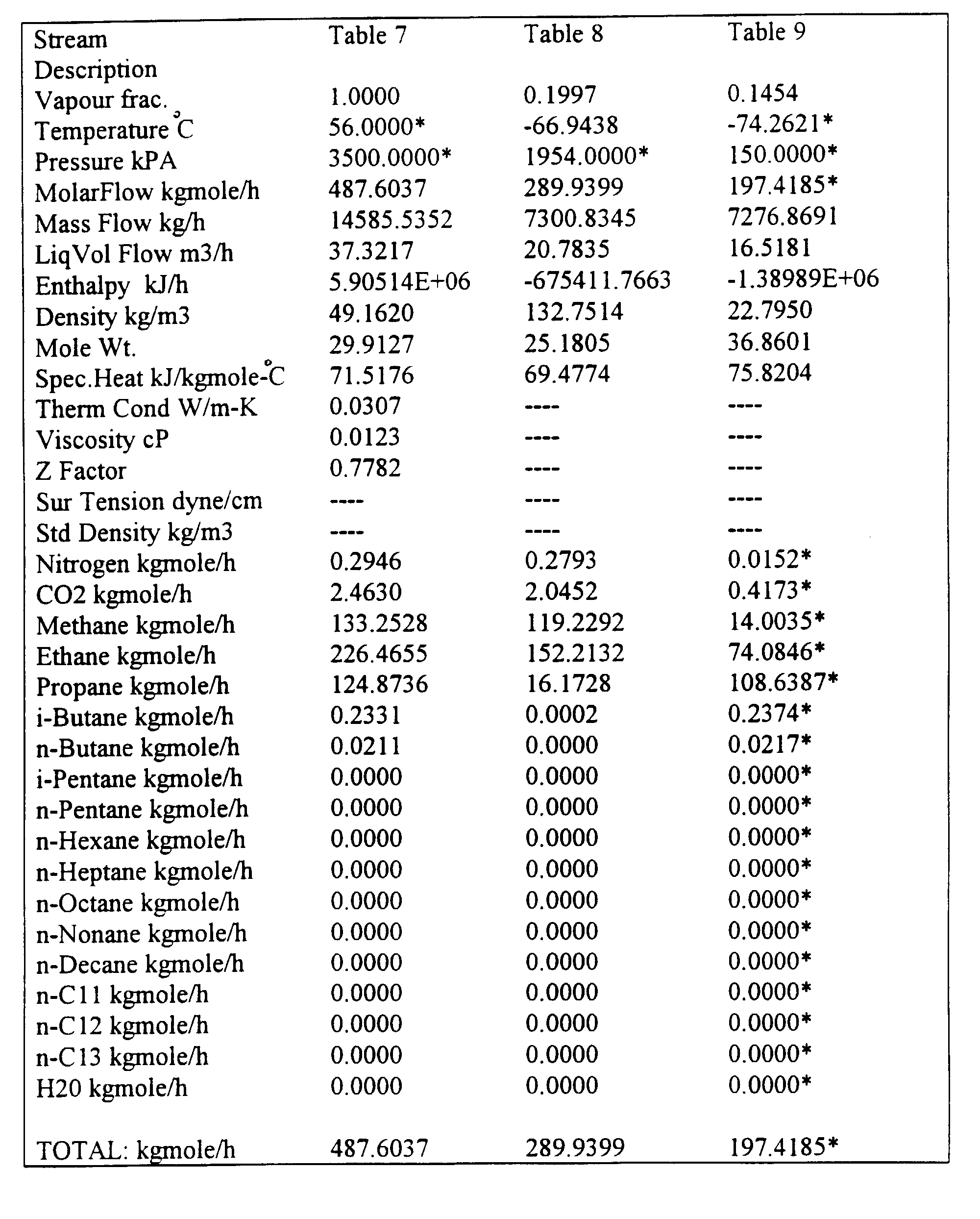

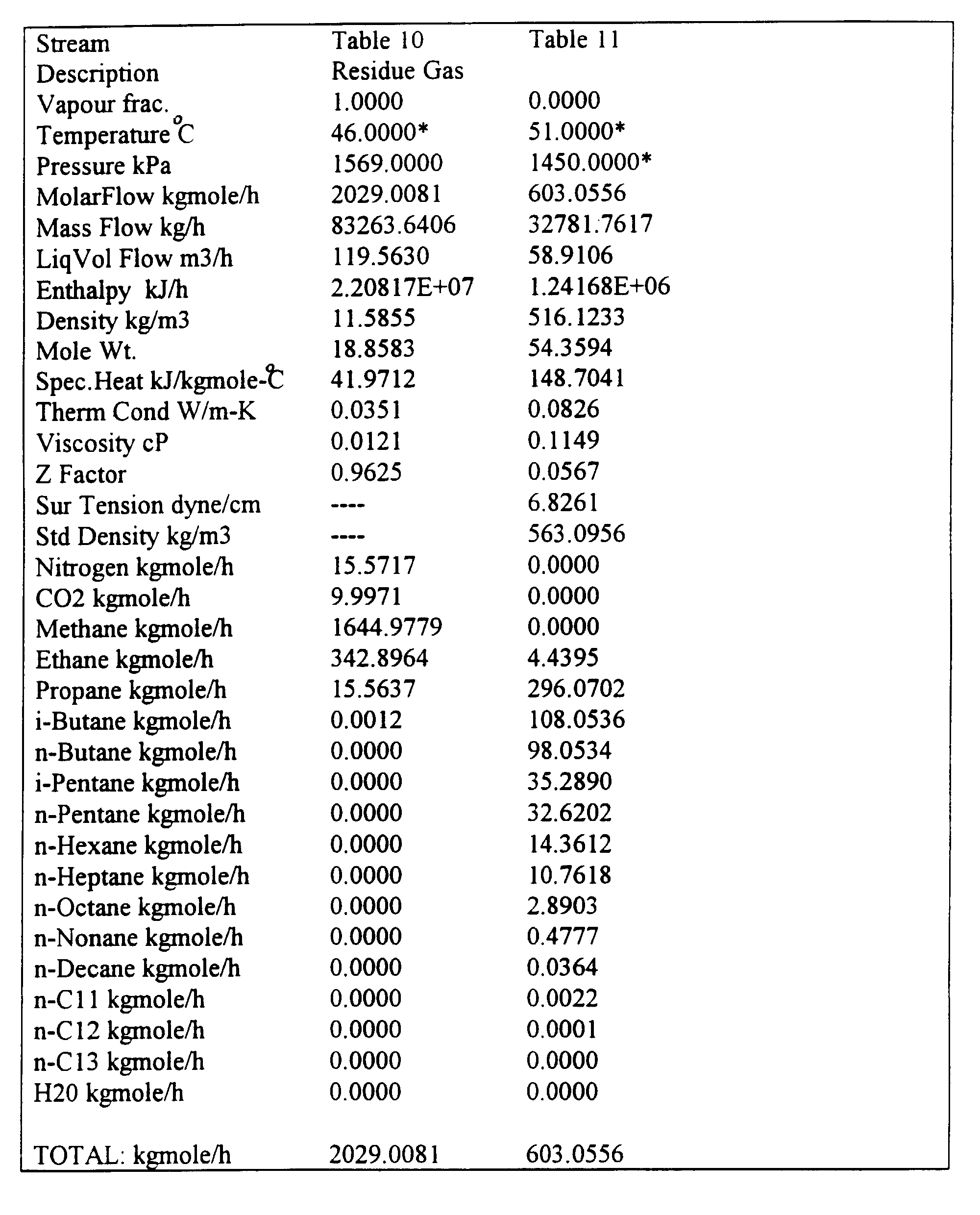

**TABLE 12**

| **GAS FRACTIONATOR** **Reflux Ration: 0.14975** | | | | | | | |
|---|---|---|---|---|---|---|---|
| Stg No. | Press kPa | Temp °C | Flow Rates Liquid | | (kgmole/h) | | Duty GJ/h |
| | | | | Vapour | Feed | Draws | |
| | | | | | | | |
| 1 | 1654.0 | -62.2 | 303.8 | | 289.9 | 2029.0V | -1.959 |
| 2 | 1661.7 | -50.8 | 250.9 | 2042.9 | | | |
| 3 | 1669.3 | -44.3 | 223.3 | 1989.9 | | | |
| 4 | 1677.0 | -40.8 | 211.4 | 1962.4 | | | |
| 5 | 1684.7 | -39.0 | 200.1 | 1950.5 | | | |
| 6 | 1692.3 | -37.2 | 166.5 | 1939.2 | | | |
| 7 | 1700.0 | -31.9 | | 1905.6 | | 2632.3 | |
| | | | 893.2L | | | | |

**TABLE 13**

| **DEETHANIZER** | | | | | | | |
|---|---|---|---|---|---|---|---|
| Stg No. | Press kPa | Temp °C | Flow Rates Liquid | | (kgmole/h) | | DutyGJ/h |
| | | | | Vapour | Feed | Draws | |
| | | | | | | | |
| 1 | 150.0 | -58.9 | 166.4 | | 197.4 | 487.6V | |
| 2 | 151.4 | -54.2 | 163.8 | 456.6 | | | |
| 3 | 152.7 | -51.7 | 152.6 | 454.0 | | | |
| 4 | 154.1 | -43.8 | 718.1 | 442.8 | 893.2 | | |
| 5 | 155.5 | -37.7 | 744.0 | 115.0 | | | |
| 6 | 156.8 | -36.1 | 748.8 | 140.9 | | | |
| 7 | 158.2 | -34.4 | 752.5 | 145.8 | | | |
| 8 | 159.5 | -32.0 | 757.7 | 149.4 | | | |
| 9 | 160.9 | -28.9 | 765.1 | 154.7 | | | |
| 10 | 162.3 | -25.6 | 773.5 | 162.0 | | | |
| 11 | 163.6 | -22.4 | 779.4 | 170.5 | | | |
| 12 | 165.0 | -17.2 | | 176.4 | | 603.1L | |
| | | | 3.654 | | | | |

**TABLE 14**

| **RECYCLE FRACTIONATOR** **Reflux Ration: 1.07113** | | | | | | | |
|---|---|---|---|---|---|---|---|
| Stg No. | Press kPa | Temp °C | Flow Rates Liquid | | (kgmole/h) | | Duty GJ/h |
| | | | | Vapour | Feed | Draws | |
| | | | | | | | |
| 1 | 3500.0 | -2.0 | 310.6 | | | 290.0V | -3.151 |
| 2 | 3505.0 | 14.9 | 312.5 | 600.6 | | | |
| 3 | 3510.0 | 22.4 | 305.6 | 602.5 | | | |
| 4 | 3515.0 | 26.9 | 300.4 | 595.6 | | | |
| 5 | 3520.0 | 29.8 | 297.7 | 590.5 | | | |
| 6 | 3525.0 | 31.5 | 296.5 | 587.8 | | | |
| 7 | 3530.0 | 32.6 | 296.1 | 586.6 | | | |
| 8 | 3535.0 | 33.2 | 296.1 | 586.1 | | | |
| 9 | 3540.0 | 33.6 | 296.2 | 586.1 | | | |
| 10 | 3545.0 | 33.9 | 296.3 | 586.2 | | | |
| 11 | 3550.0 | 34.1 1 | | 586.4 | 487.6 | 197.6L | |

## Claims

1. A method of separating a feed gas into a first supply component and a second supply component, the first supply component having a lower boiling point than the second supply component, the method comprising providing a first separation vessel (V-1) and a second separation vessel (V-2) at a pressure lower than that of the first, each of the separation vessels being arranged such that components of a lower boiling point move upwardly in the respective separation vessel as gas toward the top of the respective vessel and such that components of a higher boiling point move downwardly in the respective separation vessel toward the bottom of the respective vessel as liquid, supplying the feed gas [4] to the first separation vessel, transferring liquid [5,6] from the bottom of the first vessel (V-1) to the second vessel (V-2) as a feed thereto, extracting gas [10] from the top of said first vessel (V-1) as the first supply component, and extracting liquid [11] from the bottom of said second vessel (V-2) as the second supply component, CHARACTERIZED IN THE STEPS OF:
providing a recycle fractionator vessel (V-3) separate from the first and second vessels (V-1,V-2) at a pressure higher than that of the second vessel;
extracting gas from the top of the second vessel (V-2), compressing the gas and supplying the compressed gas as a feed [7] to the recycle fractionator vessel (V-3) for fractionation by the recycle fractionator vessel into a top gas stream [8] and a bottom liquid stream [9];
condensing and sub-cooling the top gas stream [8] and feeding the sub-cooled condensed top stream to the first vessel (V-1) as a cooled reflux;
and sub-cooling the bottom liquid stream [9] and feeding the sub-cooled bottom liquid stream to the second vessel (V-2) as a cooled reflux.

2. The method according to Claim 1 wherein the bottom liquid stream [9] is cooled by extracting cool (E10) from the gas [7] from the top of the second vessel (V-2) prior to feeding into the recycle fractionator vessel (V-3).

3. The method according to Claim 1 or 2 wherein the first vessel (V-1) includes a condenser (E6) and wherein the condensed top gas stream [8] is fed to the condenser.

4. The method according to claim 3 wherein the condensed top gas stream [8] prior to feeding to the condenser (E6) is collected in a reflux accumulator (V-4) allowing separation of liquid and gas therein, and wherein the liquid separated in the reflux accumulator (V-4) is communicated to the condenser (E6) of the first vessel (V-1) and the gas separated in the reflux accumulator (V-4) is communicated to the first vessel above the condenser separately from the liquid.

5. The method according to Claim 3 or 4 wherein the condenser (E6) comprises a plurality of vertical tubes each having therein structured packing arranged so as to intimately mix liquid moving downwardly through the tubes with gas moving upwardly through the tubes.

6. The method according to Claim 3, 4 or 5 wherein the liquid [5] from the bottom of the first vessel (V-1) is expanded and cooled (E5) and is passed through the condenser (E6) as a coolant for materials in the condenser (E6).

7. The method according to Claim 6 wherein the liquid [5] in the condenser (E6) is extracted for feeding to the second vessel through a duct, the duct including a vertical portion having a bottom end connected to the bottom of the condenser (E6) such that the vertical portion acts as a seal leg to maintain the liquid in the condenser at a required height.

8. The method according to Claim 7 wherein the duct includes a second outlet pipe connected to the top of the condenser (E6) for extracting gas therefrom.

9. The method according to any preceding claim wherein the recycle fractionator vessel (V-3) includes a condenser (E8).

10. The method according to any preceding claim wherein the coded reflux to the second vessel (V-2) is fed to the vessel at a position thereon higher than the position to which the liquid [6] from the first vessel (V-1) is fed.

11. The method according to any preceding Claim wherein the top gas stream [8] from the recycle fractionator vessel (V-3) is cooled (E7) using cool from the liquid [5] taken from the first vessel (V-1) prior to feeding to the second vessel (V-2).

## Patentansprüche

1. Verfahren zur Auftrennung eines Einsatzgases in eine erste Aufgabegutkomponente und eine zweite Aufgabegutkomponente, wobei die erste Aufgabegutkomponente einen niedrigeren Siedepunkt als die zweite Aufgabegutkomponente hat, bei dem man eine erste Trennkolonne (V-1) und eine zweite Trennkolonne (V-2), die bei einem niedrigeren Druck betrieben wird als die erste Kolonne, bereitstellt, wobei die Trennkolonnen jeweils so angeordnet sind, daß tiefersiedende Komponenten sich in der jeweiligen Trennkolonne als Gas in Richtung des Kopfes der jeweiligen Kolonne nach oben bewegen und höhersiedende Komponenten sich in der jeweiligen Trennkolonne als Flüssigkeit in Richtung des Sumpfes der jeweiligen Kolonne nach unten bewegen, der ersten Trennkolonne das Einsatzgas [4] zuführt, vom Sumpf der ersten Kolonne (V-1) Flüssigkeit [5, 6] als Einsatzstoff in die zweite Kolonne (V-2) überführt, am Kopf der ersten Kolonne (V-1) Gas [10] als erste Aufgabegutkomponente abzieht und am Sumpf der zweiten Kolonne (V-2) Flüssigkeit [11] als zweite Aufgabegutkomponente abzieht, DADURCH GEKENNZEICHNET, daß man:
getrennt von der ersten und zweiten Kolonne (V-1, V-2) eine Rückführungsfraktionierkolonne (V-3) bereitstellt, die bei einem höheren Druck betrieben wird als die zweite Kolonne;
am Kopf der zweiten Kolonne (V-2) Gas abzieht, verdichtet und als Einsatzstoff [7] der Rückführungsfraktionierkolonne (V-3) zuführt, in der es in einen Kopfgasstrom [8] und einen Sumpfflüssigkeitsstrom [9] fraktioniert wird;
den Kopfgasstrom [8] kondensiert und unterkühlt und dann der ersten Kolonne (V-1) als gekühlten Rücklauf zuführt
und den Sumpfflüssigkeitsstrom [9] unterkühlt und der zweiten Kolonne (V-2) als gekühlten Rücklauf zuführt.

2. Verfahren nach Anspruch 1, bei dem man den Sumpfflüssigkeitsstrom [9] vor der Einspeisung in die Rückführungsfraktionierkolonne (V-3) durch Extraktion von Kälte (E10) aus dem am Kopf der zweiten Kolonne (V-2) abgezogenen Gas [7] abkühlt.

3. Verfahren nach Anspruch 1 oder 2, bei dem man den kondensierten Kopfgasstrom [8] einem in der ersten Kolonne (V-1) enthaltenen Kondensator (E6) zuführt.

4. Verfahren nach Anspruch 3, bei dem man den kondensierten Kopfgasstrom [8] vor der Einspeisung in den Kondensator (E6) in einem Rücklaufsammler (V-4) sammelt, in dem sich Flüssigkeit und Gas voneinander trennen, und die im Rücklaufsammler (V-4) abgetrennte Flüssigkeit dem Kondensator (E6) der ersten Kolonne (V-1) und das im Rücklaufsammler (V-4) abgetrennte Gas der ersten Kolonne oberhalb des Kondensators von der Flüssigkeit getrennt zuführt.

5. Verfahren nach Anspruch 3 oder 4, bei dem der Kondensator (E6) mehrere vertikale Rohre aufweist, die jeweils eine geordnete Packung enthalten, die so angeordnet ist, daß durch die Rohre nach unten strömende Flüssigkeit mit durch die Rohre nach oben strömendem Gas innig vermischt wird.

6. Verfahren nach Anspruch 3, 4 oder 5, bei dem man die am Sumpf der ersten Kolonne (V-1) abgezogene Flüssigkeit [5] entspannt und abkühlt (E5) und als Kühlmittel für Materialien im Kondensator (E6) durch den Kondensator (E6) leitet.

7. Verfahren nach Anspruch 6, bei dem man die Flüssigkeit [5] im Kondensator (E6) zur Einspeisung in die zweite Kolonne über eine Leitung abzieht, welche einen vertikalen Teil mit einem unteren Ende aufweist, das mit dem Sumpf des Kondensators (E6) so verbunden ist, daß der vertikale Teil als Sperrschenkel dient und die Flüssigkeit im Kondensator auf einer erforderlichen Höhe hält.

8. Verfahren nach Anspruch 7, bei dem die Leitung ein zweites Ableitungsrohr aufweist, das zwecks Gasentnahme mit dem Kopf des Kondensators (E6) verbunden ist.

9. Verfahren nach einem der vorhergehenden Ansprüche, bei dem die Rückführungsfraktionierkolonne (V-3) einen Kondensator (E8) enthält.

10. Verfahren nach einem der vorhergehenden Ansprüche, bei dem man den gekühlten Rücklauf zur zweiten Kolonne (V-2) der Kolonne an einer Stelle zuführt, die höher liegt als die Stelle, an der die Flüssigkeit [6] aus der ersten Kolonne (V-1) eingespeist wird.

11. Verfahren nach einem der vorhergehenden Ansprüche, bei dem man den Kopfgasstrom [8] aus der Rückführungsfraktionierkolonne (V-3) vor der Einspeisung in die zweite Kolonne (V-2) mittels Kälte aus der der ersten Kolonne (V-1) entnommenen Flüssigkeit [5] abkühlt (E7).

## Revendications

1. Procédé de séparation d'un gaz de charge en un premier composant d'alimentation et un deuxième composant d'alimentation, le premier composant d'alimentation présentant un point d'ébullition inférieur à celui du deuxième composant d'alimentation, procédé consistant à utiliser une première cuve de séparation (V-1) et une deuxième cuve de séparation (V-2) dont la pression est inférieure à celle de la première, chacune des cuves de séparation étant conçue de façon que les composants ayant un point d'ébullition plus bas se dirigent vers le haut dans la cuve de séparation respective sous forme gazeuse en direction du haut de la cuve respective et que les composants présentant un point d'ébullition plus élevé se dirigent vers le bas dans la cuve de séparation respective en direction du fond de la cuve sous forme liquide, à alimenter en gaz de charge (4) la première cuve de séparation, à transférer le liquide (5,6) du fond de la première cuve (V-1) vers la deuxième cuve (V-2) pour l'alimenter, à extraire le gaz (10) du haut de la première cuve (V-1) comme premier composant d'alimentation, et à extraire le liquide (11) du fond de la deuxième cuve (V-2) comme deuxième composant d'alimentation, caractérisé par les étapes suivantes :
. utilisation d'une cuve (V-3) de fractionnement du recyclat distincte des première et deuxième cuves (V-1,V-2) dont la pression est supérieure à celle de la deuxième cuve ;
. extraction de gaz du haut de la deuxième cuve (V-2), compression du gaz et apport du gaz comme charge (7) à la cuve de fractionnement du recyclat (V-3) en vue de son fractionnement par celle-ci en un flux supérieur gazeux (8) et un flux inférieur liquide (9) ;
. condensation et sous-refroidissement du flux supérieur gazeux (8) et apport du flux supérieur condensé sous-refroidi à la première cuve (V-1) comme reflux refroidi ;
. et sous-refroidissement du flux inférieur liquide (9) et apport du flux inférieur liquide sous-refroidi à la deuxième cuve (V-2) comme reflux refroidi.

2. Procédé selon la revendication 1, dans laquelle le flux inférieur liquide (9) est refroidi en prélevant du froid (E10) du gaz (7) provenant du haut de la deuxième cuve (V-2) avant d'en alimenter la cuve de fractionnement de recyclat (V-3).

3. Procédé selon la revendication 1 ou 2, dans laquelle la première cuve (V-1) comprend un condensateur (E6) et dans laquelle on alimente le condenseur en flux gazeux supérieur (8) condensé.

4. Procédé selon la revendication 3, dans laquelle le flux gazeux supérieur (8) condensé, avant d'alimenter le condenseur (E6) est recueilli dans un accumulateur de reflux (V-4) qui permet la séparation du liquide et du gaz, et dans laquelle le liquide séparé dans l'accumulateur de reflux (V-4) est amené au condenseur (E6) de la première cuve (V-1) et le gaz séparé dans l'accumulateur de reflux (V-4) est amené à la première cuve au-dessus du condenseur séparément du liquide.

5. Procédé selon la revendication 3 ou 4, dans laquelle le condensateur (E6) comprend une pluralité de tubes verticaux, chacun comportant à l'intérieur un garnissage structuré prévu pour mélanger intimement le liquide descendant à travers les tubes avec le gaz remontant à travers les tubes.

6. Procédé selon la revendication 3, 4 ou 5, dans laquelle le liquide (5) provenant du fond de la première cuve (V-1) est détendu et refroidi (E5) et passé à travers le condenseur (E6) en tant que réfrigérant pour les matériaux du condenseur (E6).

7. Procédé selon la revendication 6, dans laquelle le liquide (5) dans le condenseur (E6) est extrait pour alimenter la deuxième cuve au moyen d'un conduit, le conduit présentant une partie verticale dont l'extrémité inférieure est reliée au fond du condenseur (E6) de sorte que la partie verticale fait office de patte d'étanchéité pour maintenir le liquide dans le condenseur à une hauteur requise.

8. Procédé selon la revendication 7, dans laquelle le conduit présente un deuxième tuyau de sortie relié au haut du condenseur (E6) pour en extraire le gaz.

9. Procédé selon l'une quelconque des revendications précédentes, dans laquelle la cuve de fractionnement du recyclat (V-3) comporte un condenseur (E8).

10. Procédé selon l'une quelconque des revendications précédentes, dans laquelle le reflux refroidi en direction de la deuxième cuve (V-2) est apporté à la cuve à un niveau plus élevé de celle-ci que le niveau auquel le liquide (6) de la première cuve (V-1) est apporté.

11. Procédé selon l'une quelconque des revendications précédentes, dans laquelle le flux gazeux supérieur (8) de la cuve de fractionnement du recyclat (V-3) est refroidi (E7) en utilisant le froid du liquide (5) pris dans la première cuve (V-1) avant de l'apporter à la deuxième cuve (V-2).
